# FASCICULE DE BREVET EUROPEEN

(11) **EP 0 779 082 B1**
(45) Date de publication et mention de la délivrance du brevet: **12.06.2002**
(21) Numéro de dépôt: 96402444.2
(22) Date de dépôt: 14.11.1996
(51) Int. Cl.: A62D 3/00

(54) **Procédé de traitement de résidus solides contenant des métaux, notamment des résidus d'épuration de fumées d'incinération d'ordures ménagères**
Verfahren zur Behandlung von Metall enthaltenden festen Rückständen insbesondere von Rückständen der Reinigung von Müllverbrennungsabgasen
Process for treating solid residues containing metals especially residues of purification of fumes from garbage incineration

(30) Priorité: 13.12.1995 FR 9514798
(43) Date de publication de la demande: 18.06.1997
(73) Titulaire: ELECTRICITE DE FRANCE, 75008 Paris (FR)
(72) Inventeur: Pasquini, Pierre, 77300 Fontainebleau (FR); Leclerc, Olivier, 77250 Moret sur Loing (FR); Meunier, Roger, 77140 Moncourt Froronville (FR); Lebrun, Fabrice, 75013 Paris (FR)
(74) Mandataire: Jacobson, Claude

(56) Documents cités:
- EP-A- 0 551 056
- WO-A-93/22001
- WO-A-94/23856
- DE-A- 4 124 101

## Description

La présente invention concerne le traitement des déchets riches en éléments métalliques et se rapporte plus particulièrement à une technique de traitement de résidus résultant de l'incinération des ordures ménagères ou encore de boues contenant des éléments métalliques ou similaires.

Comme on le sait, les agglomérations urbaines sont productrices d'une grande quantité de déchets parmi lesquels figurent les ordures dites ménagères qui posent de sérieux problèmes aux municipalités et aux pouvoirs publics, tant en ce qui concerne leur collecte que leur traitement en vue de la diminution de leur volume et de leur masse, et aussi d'une réduction de leur nocivité.

Une technique classique utilisée pour le traitement des ordures ménagères consiste à les incinérer.

Ceci permet d'obtenir une diminution importante du volume et de la masse avec récupération éventuelle d'énergie thermique.

L'incinération qui est généralement effectuée à une température de l'ordre de 1000°C en présence d'exédent d'air, produit outre des gaz des résidus en particules solides.

On admet qu'une tonne d'ordures ménagères traitées fournit de l'ordre de 200 à 250 kg de mâchefer, environ 30 kg de cendres volantes communément appelées REFIOM (Résidus d'Epuration des Fumées d'Incinération d'Ordures Ménagères) collectées au niveau de la chaudière par filtration et/ou dépoussiérage des gaz. Ces cendres sont riches en sels et éléments métalliques toxiques tels que Hg, Zn, Pb, Cd.

Or, tous ces résidus en particulier les résidus d'épuration des fumées d'incinération sont le plus souvent dangereux, du fait qu'ils peuvent relarguer des substances nocives par lixiviation et de ce fait ces résidus sont susceptibles de mettre en péril les sols et les nappes phréatiques.

En raison de leur toxicité, ces résidus doivent depuis le 31 mars 1995 être stabilisés et entreposés dans des Centres d'Enfouissement Techniques (CET) communément appelés décharges de classe 1.

Le déversement des détritus dans les décharges est soumis à une réglementation nationale voire européenne évolutive et de plus en plus sévère, pour la conservation de l'environnement et la préservation des nappes phréatiques en particulier.

Tel est notamment le cas pour les cendres volantes qui selon la nomenclature française actuelle ne peuvent être stockées après stabilisation que dans des décharges de classe 1 dont le sous-sol comprend une couche étanche d'argile de 6 m d'épaisseur au moins.

Il n'existe actuellement en France que onze décharges dites de classe 1 répondant aux conditions précitées, une seule de ces décharges étant située au sud de la Loire.

La vitrification est l'une des méthodes de stabilisation permettant d'obtenir un produit stabilisé peu sensible à la lixiviation.

La demande de brevet français n° 94 13 477 déposée le 9 novembre 1994 par la Demanderesse concerne un procédé pour le traitement de déchets riches en éléments métalliques notamment des résidus d'épuration des fumées d'incinération d'ordures ménagères selon lequel :
a) on fait fondre dans un four les déchets pour les vitrifier;
b) on oxyde avec de l'air à la température ambiante les fumées émises par le four;
c) on fait une trempe sèche par apport d'air des fumées oxydées;
d) on filtre les fumées oxydées trempées pour obtenir des cendres secondaires riches en éléments métalliques;
e) on lave pour les neutraliser les fumées oxydées trempées et filtrées et on les évacue;
f) on récupère les cendres secondaires contenant des sels métalliques produites lors de l'étape de trempe et lors de l'étape de filtration;
g) on forme une solution aqueuse à partir des centres secondaires contenant les sels métalliques et on précipite les métaux sous forme d'hydroxydes ou de sulfures ou de carbonates métalliques insolubles afin d'obtenir une boue et une liqueur aqueuse saline;
h) on mélange à cette boue aqueuse un adjuvant constitué en masse d'environ au moins la moitié de cendres de centrale électrique thermique et le reste d'hydroxyde ou oxyde alcalin tel que de calcium, pour stabiliser les éléments métalliques précités;
i) on retire, on neutralise et on évacue la liqueur saline surnageant au-dessus de cette boue;
j) on recueille par décantation de cette boue, les sels métalliques insolubles et les éléments métalliques précipités et stabilisés; et
k) on filtre et on sèche les sels métalliques insolubles et les éléments métalliques précipités stabilisés résultant de la décantation de la boue, on les mélange aux déchets et on les fait fondre dans le four pour les vitrifier.

Le traitement réalisé par ce procédé permet d'obtenir un vitrifiât chargé notamment en Zn et Pb.

C'est ainsi que le procédé décrit dans la demande de brevet précitée permet d'obtenir un produit vitrifié enrichi en métaux lourds, ce qui a pour avantage de limiter la quantité de déchets ultimes lors du traitement complet des REFIOM à moins de 1%.

Cependant, l'incertitude sur l'évolution de la législation dans le domaine de la stabilisation/solidification a conduit la Demanderesse à orienter également ses études vers l'obtention d'un vitrifiat appauvri en métaux toxiques.

A cet effet, il est nécessaire de pouvoir travailler en milieu réducteur.

L'invention a pour but de créer un procédé de traitement par voie réductrice de résidus solides contenant des métaux, afin d'étendre la flexibilité du procédé de stabilisation des résidus solides et de s'adapter plus facilement aux évolutions de la législation en vue de banaliser voire de valoriser le produit vitrifié obtenu et de recycler dans les filières métallurgiques les sous-produits riches en métaux.

Elle a donc pour objet un procédé de traitement de résidus solides contenant des métaux, notamment des résidus d'épuration de fumées d'incinération d'ordures ménagères, caractérisé en ce qu'il consiste :
a) à mélanger les résidus solides avec un agent réducteur solide;
b) à traiter le mélange dans un four à une température supérieure à 1000°C pour obtenir un vitrifiat appauvri en métaux et un dégagement de gaz enrichi en éléments métalliques;
c) à procéder à une trempe à l'air des gaz riches en métaux, pour condenser en particulier les espèces métalliques;
d) à filtrer les produits résultant de la trempe à l'air pour obtenir des cendres secondaires riches en sels métalliques;
e) à l'issue de l'opération de filtration, à laver les fumées pour les neutraliser afin de les rejeter à l'atmosphère.
f) à former une solution aqueuse à partir des cendres secondaires contenant les sels métalliques et à précipiter les métaux sous forme d'hydroxydes ou de sulfures ou de carbonates métalliques insolubles afin d'obtenir une boue et une liqueur aqueuse saline;
g) à retirer pour l'évacuer et la neutraliser la liqueur saline surnageant après décantation au-dessus de cette boue;
h) à recueillir cette boue contenant les sels métalliques insolubles et les éléments métalliques précipités;
i) à filtrer les sels métalliques insolubles et les éléments métalliques précipités contenus dans la boue;
j) à laver la boue avec une solution à pH identique à celui de l'opération de précipitation f) pour éliminer les espèces salines résiduelles présentes dans la solution d'hydratation des solides obtenus après filtration; et
k) à sécher et à mettre en forme le solide filtré et lavé riche en métaux valorisables.

L'ensemble de ces opérations permet d'obtenir d'une part un vitrifiât appauvri en espèces métalliques toxiques et d'autre part, un solide assimilable à un minerai riche en métaux directement valorisable dans les filières métallurgiques.

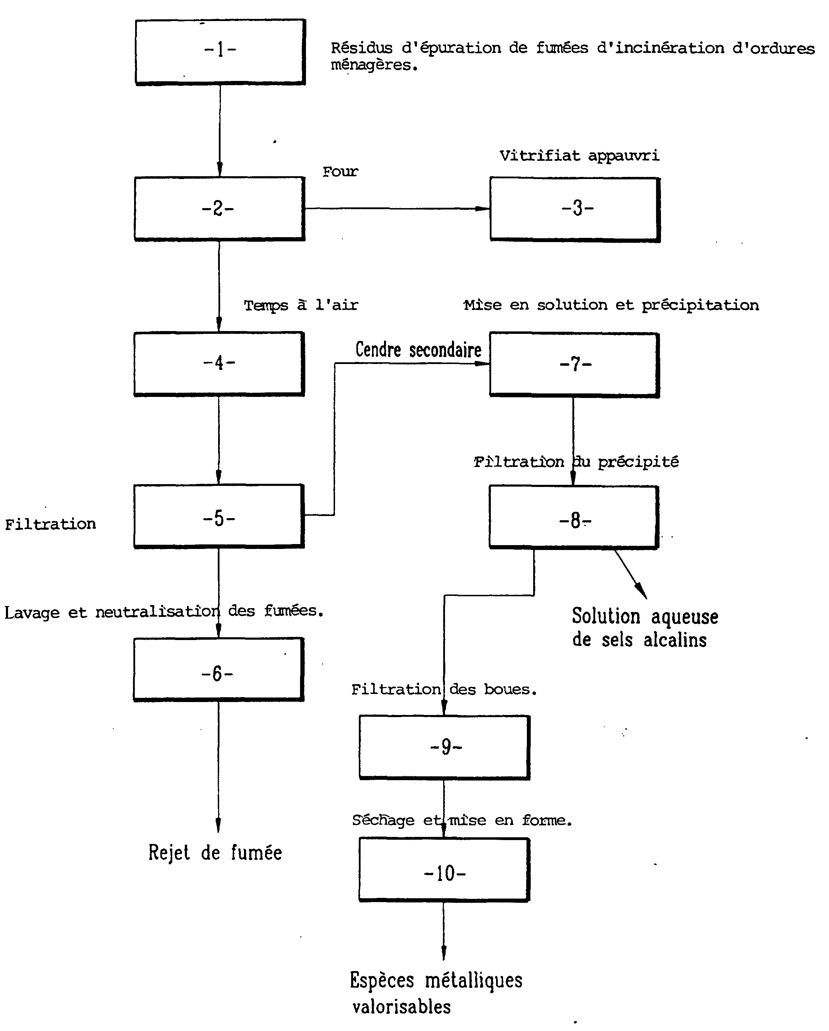

L'invention sera mieux comprise à la lecture de la description qui va suivre, donnée uniquement à titre d'exemple et faite en se référant au dessin annexé, sur lequel :
- la Fig.unique est un organigramme illustrant la mise en oeuvre du procédé de traitement suivant l'invention.

Les techniques de traitement des déchets et détritus et, en particulier les techniques de traitement des ordures ménagères sont bien connues.

On ne décrira donc dans ce qui suit que ce qui concerne directement ou indirectement l'invention.

Si le phénomène physico-chimique de carbo-réduction est bien connu dans le domaine de la sidérurgie, son usage ne l'est pas dans le traitement thermique des déchets.

La mise en oeuvre du procédé de l'invention est donc la suivante.

A la masse à traiter des REFIOM est ajoutée une quantité d'un agent réducteur, du carbone par exemple, de préférence solide.

Le tout est introduit dans un four de vitrification.

Ce four est avantageusement du type fonctionnant avec deux électrodes en graphite.

L'érosion naturelle de ces électrodes favorise le phénomène de réduction.

Le mélange entre le résidu solide par exemple les REFIOM et l'agent réducteur, tel que différentes variétés de carbone comme le charbon pulvérisé, le graphite, la carburite, le coke de pétrole ou d'autres espèces minérales ou organiques réductrices, est réalisé soit directement dans le four de fusion, soit de préférence lors de la préparation de la charge à vitrifier.

Il comprend jusqu'à 25%, avantageusement entre 2 et 10% et de préférence 5% d'agent réducteur.

La proportion du mélange est fonction de la teneur résiduelle en métaux toxiques que l'on souhaite obtenir dans le vitrifiat et de la composition initiale de la charge.

Par ailleurs, cette teneur résiduelle dépend également du temps de traitement limité par la cinétique des réactions.

Le procédé de l'invention va être décrit en détail en référence à l'organigramme de la figure unique.

Au cours d'une phase 1, on procède au mélange des REFIOM avec un agent réducteur solide dans une proportion inférieure à 25%.

Au cours de la phase 2, on traite le mélange dans un four à une température supérieure à 1000°C et de préférence à 1400°C.

On obtient un vitrifiat appauvri en métaux toxiques ayant des teneurs inférieures à 0,2% de Zn, 0,05% de Pb, 0,01 de Hg, 0,01% de Cd au cours de la phase 3.

Les gaz à la sortie du four contiennent les éléments métalliques toxiques en phase vapeur.

Ces gaz subissent au cours de la phase 4, une trempe à l'air suivie d'une opération de filtration au cours de la phase 5 à l'occasion de laquelle il y a récupération de cendres secondaires.

Après filtration, la phase 6 consiste à procéder au lavage et à la neutralisation des fumées qui sont alors rejetées à l'atmosphère.

Les cendres secondaires obtenues à l'issue de l'opération de filtration sont riches en sels métalliques toxiques (sulfates et chlorures de Zn, Pb, Cu, Ni ...).

On procède alors au cours de la phase 7 à la mise en solution puis à la précipitation en milieu alcalin.

Une filtration du précipité au cours de la phase 8 donne d'une part, une solution aqueuse de sels, tels que NaCl, Na2SO4, KCl, K2SO4, CaCl2 et d'autre part, des boues d'espèces métalliques précipitées telles que Zn(OH)2 Pb(OH)2 ... PbSO4. Ces boues sont soumises à une nouvelle filtration au cours de la phase 9 et à une opération de séchage et de mise en forme au cours de la phase 10 à l'issue de laquelle on obtient des espèces métalliques valorisables.

Ces espèces se présentent sous la forme d'un équivalent de minerais riche en métaux qui peut être commercialisé pour être traité dans l'industrie métallurgique comme par exemple par un procédé de pyrométallurgie ou un procédé d'hydrométallurgie.

Les résultats expérimentaux suivants ont été obtenus en utilisant comme élément traceur, le zinc qui à haute température (1400°C), en absence d'agent réducteur est peu volatil.

Une série d'expérimentations en petits creusets chauffés à 1400°C a permis de déterminer la quantité de carbone à ajouter à la charge et d'évaluer différents agents réducteurs.

Un four pilote pouvant traiter 300 Kg/h, équipé de deux électrodes en graphite a validé les résultats obtenus en creuset.

Les résidus à traiter étaient des REFIOM provenant de l'usine d'incinération de St-Ouen.

L'agent réducteur était de la carburite.

Les temps de séjour après l'introduction des REFIOM dans le four étaient de 15 min, 60 min, 120 min.

Les conditions d'essais sont indiquées dans le tableau ci-après :

| **CARBONE (%)** | **Temps séjour (minute)** | **TAUX Zn (%)** |
|---|---|---|
| 5 | 15' | 0,08 |
| 5 | 60' | 0,04 |
| 5 | 120' | 0,04 |
| 2,5 | 15' | 0,21 |
| 2,5 | 30' | 0,18 |
| 2,5 | 60' | 0,16 |

Ce tableau montre que le traitement selon le procédé de l'invention permet d'obtenir une diminution considérable du taux de Zn par rapport au taux obtenu dans un vitrifiat traité sans adjonction de carbone qui est de 2,3% de zinc.

La mise en oeuvre du procédé qui vient d'être décrit est assurée dans une installation similaire à celle décrite dans la demande de brevet n° 94 13 477 déposée le 9 novembre 1994 par la Demanderesse, mais dont les conditions d'exploitation sont adaptées à un fonctionnement en milieu réducteur.

## Revendications

1. Procédé de traitement de résidus solides contenant des métaux, **caractérisé en ce qu'**il consiste :
a) à mélanger les résidus solides avec un agent réducteur solide;
b) à traiter le mélange dans un four à une température supérieure à 1000°C pour obtenir un vitrifiat appauvri en métaux et un dégagement de gaz enrichi en éléments métalliques en phase vapeur;
c) à procéder à une trempe à l'air des gaz riches en métaux;
d) à filtrer les produits résultant de la trempe à l'air pour obtenir des cendres secondaires riches en sels métalliques;
e) à l'issue de l'opération de filtration, à procéder au lavage des fumées pour les rejeter à l'atmosphère;
f) à former une solution aqueuse à partir des cendres secondaires contenant les sels métalliques et à précipiter les métaux sous forme d'hydroxydes ou de sulfures ou de carbonates métalliques insolubles afin d'obtenir une boue et une liqueur aqueuse saline;
g) à retirer pour l'évacuer et la neutraliser la liqueur saline surnageant après décantation au-dessus de cette boue;
h) à recueillir cette boue contenant les sels métalliques insolubles et les éléments métalliques précipités;
i) à filtrer les sels métalliques insolubles et les éléments métalliques précipités contenus dans la boue;
j) à laver la boue avec une solution à pH identique à celui de l'opération de précipitation f) pour éliminer les espèces salines résiduelles présentes dans la solution d'hydratation des solides obtenus après filtration; et
k) à sécher et à mettre en forme le solide filtré et lavé riche en métaux valorisables.

2. Procédé suivant la revendication 1, **caractérisé en ce que** le mélange des résidus solides et d'agent réducteur comporte jusqu'à 25% d'agent réducteur.

3. Procédé suivant la revendication 2, **caractérisé en ce que** le mélange des résidus solides et d'agent réducteur comporte de 2 à 10% d'agent réducteur.

4. Procédé suivant la revendication 3, **caractérisé en ce que** le mélange de résidus solides et d'agent réducteur comporte 5% d'agent réducteur.

5. Procédé suivant l'une des revendications 1 à 4, **caractérisé en ce que** l'agent réducteur est une variété de carbone tel que le charbon pulvérisé, le graphite, la carburite, le coke de pétrole.

6. Procédé suivant l'une des revendictions 1 à 5, **caractérisé en ce que** le mélange des résidus solides avec l'agent réducteur solide est réalisé lors de la préparation de la charge à vitrifier ou directement dans le four.

7. Procédé suivant l'une des revendications 1 à 6, **caractérisé en ce que** la température du four de traitement du mélange des résidus solides et d'agent réducteur est supérieure à 1000°C et, de préférence égale à 1400°C.

8. Procédé suivant l'une des revendictions 1 à 7, **caractérisé en ce que** le vitrifiat appauvri en métaux obtenu à l'issue du traitement du mélange dans le four à des teneurs inférieures à 0,2% de Zn, 0,05% de Pb, 0,01% de Hg, 0,01% de Cd.

## Claims

1. Process for the treatment of solid waste comprising metals, **characterized in that** it consists:
a) in mixing the solid waste with a solid reducing agent;
b) in treating the mixture in a furnace at a temperature of greater than 1000°C to produce a vitrified material depleted in metals and to release gas enriched in metal elements in the vapour phase;
c) in carrying out an air quenching of the gases rich in metals;
d) in filtering the products resulting from the air quenching to produce secondary ash rich in metal salts;
e) on conclusion of the filtration operation, in washing the flue gases in order to discharge them to the atmosphere;
f) in forming an aqueous solution from the secondary ash comprising the metal salts and in precipitating the metals in the form of insoluble metal hydroxides or sulphides or carbonates in order to obtain a sludge and a saline aqueous liquor;
g) in withdrawing the supernatant saline liquor above this sludge, after separation by settling, in order to discharge it and to neutralize it;
h) in collecting this sludge, which comprises insoluble metal salts and precipitated metal elements;
i) in filtering off the insoluble metal salts and the precipitated metal elements present in the sludge;
j) in washing the sludge with a solution at a pH identical to that of the precipitation operation f) in order to remove the residual saline entities present in the hydratation solution of the solids which are obtained after filtration; and
k) in drying and in shaping the filtered and washed solid rich in recoverable metals.

2. Process according to Claim 1, **characterized in that** the mixture of the solid waste and of reducing agent comprises up to 25% of reducing agent.

3. Process according to Claim 2, **characterized in that** the mixture of the solid waste and of reducing agent comprises from 2 to 10% of reducing agent.

4. Process according to Claim 3, **characterized in that** the mixture of solid waste and of reducing agent comprises 5% of reducing agent.

5. Process according to one of Claims 1 to 4, **characterized in that** the reducing agent is a type of carbon, such as pulverized carbon, graphite, carburite or petroleum coke.

6. Process according to one of Claims 1 to 5, **characterized in that** the mixing of the solid waste with the solid reducing agent is carried out during the preparation of the charge to be vitrified or directly in the furnace.

7. Process according to one of Claims 1 to 6, **characterized in that** the temperature of the furnace for treating the mixture of the solid waste and of reducing agent is greater than 1000°C and preferably equal to 1400°C.

8. Process according to one of Claims 1 to 7, **characterized in that** the vitrified material depleted in metals obtained on conclusion of the treatment of the mixture in the furnace has contents of less than 0.2% of Zn, 0.05% of Pb, 0.01% of Hg and 0.01% of Cd.

## Patentansprüche

1. Verfahren zur Behandlung von metallhaltigen festen Rückständen, dadurch charakterisiert, dass es besteht aus:
a) Mischen der festen Rückstände mit einem festen Reduktionsmittel;
b) Behandeln der Mischung in einem Ofen bei einer Temperatur von mehr als 1000°C, wobei ein an Metallen verarmtes Glas und ein Entweichen von mit metallischen Elementen angereichertem Gas in die Gasphase erzielt wird;
c) Durchführung einer Lufthärtung mit den mit Metallen angereicherten Gasen;
d) Filtrieren der Produkte der Lufthärtung, wobei an Metallsalzen angereicherte Sekundäraschen erhalten werden;
e) im Anschluss an das Filtrieren Waschen der Abgase, um diese in die Atmosphäre freizusetzen;
f) Bildung einer wässrigen Lösung ausgehend von den die Metallsalze enthaltenden Sekundäraschen und Ausfällen der Metalle in Form von unlöslichen Metallhydroxiden, -sulfiden oder -carbonaten, wobei ein Schlamm und eine wässrige Salzflüssigkeit erhalten werden;
g) Entnehmen der überstehenden Salzflüssigkeit zum Eindampfen und Neutralisieren nach Dekantieren vom Schlamm;
h) Aufnehmen dieses Schlamms, der die unlöslichen Metallsalze und die ausgefällten metallischen Elemente enthält;
i) Filtrieren der im Schlamm enthaltenen unlöslichen Metallsalze und der ausgefällten metallischen Elemente;
j) Waschen des Schlamms mit einer Lösung mit einem pH, der identisch ist mit dem im Ausfällungsschritt f), um die in der Hydratationslösung vorhandenen restlichen Salzspezies aus den nach der Filtration erhaltenen Feststoffen zu entfernen; und
k) Trocknen und Formen des filtrierten und gewaschenen Feststoffs, der reich an verwertbaren Metallen ist.

2. Verfahren nach Anspruch 1, dadurch charakterisiert, dass die Mischung der festen Rückstände und des Reduktionsmittels bis zu 25 % Reduktionsmittel umfasst.

3. Verfahren nach Anspruch 2, dadurch charakterisiert, dass die Mischung von festen Rückständen und Reduktionsmittel 2 bis 10 % Reduktionsmittel umfasst.

4. Verfahren nach Anspruch 3, dadurch charakterisiert, dass die Mischung von festen Rückständen und Reduktionsmittel 5 % Reduktionsmittel umfasst.

5. Verfahren nach einem der Ansprüche 1 bis 4, dadurch charakterisiert, dass das Reduktionsmittel eine Art von Kohlenstoff ist wie pulverisierte Kohle, Graphit, Carburit, Petrolkoks.

6. Verfahren nach einem der Ansprüche 1 bis 5, dadurch charakterisiert, dass die Mischung der festen Rückstände mit dem festen Reduktionsmittel während der Herstellung der zu vitrifizierenden Charge oder direkt im Ofen hergestellt wird.

7. Verfahren nach einem der Ansprüche 1 bis 6, dadurch charakterisiert, dass die Temperatur des Ofens zur Behandlung der Mischung der festen Rückstände und des Reduktionsmitteis höher ist als 1000°C, bevorzugt gleich 1400°C.

8. Verfahren nach einem der Ansprüche 1 bis 7, dadurch charakterisiert, dass das an Metallen verarmte Glas, das am Ende der Behandlung der Mischung im Ofen erhalten wird, Gehalte von weniger als 0,2 % Zn, 0,05 % Pb, 0,01 % Hg, 0,01 % Cd aufweist.
